# EUROPEAN PATENT APPLICATION

(11) **EP 1 419 863 A2**
(43) Date of publication of application: **19.05.2004**
(21) Application number: 03023501.4
(22) Date of filing: 15.10.2003
(51) Int. Cl.: B28B 11/04, B28B 11/00, B05C 19/04, B41F 15/08

(54) **Equipment for applying powdery products on items for decorating the same**

(30) Priority: 24.01.2003 IT BO20030032
(71) Applicant: T.S.C. S.p.A., 41042 Fiorano Modenese (MO) (IT)
(72) Inventor: Schianchi, Roberto, 41014 Castelvetro (Modena) (IT)
(74) Representative: Dall'Olio, Giancarlo

(57) **Abstract**

The proposed equipment (100) for applying powdery products on items for decorating the same items, the equipment includes an endless belt (10) featuring, in its outer surface, a plurality of pits (A) for receiving said powdery products (S) therein, said pits being so arranged in said surface, as to reproduce the decoration to be made on said items (P), with said items being conveyed along a horizontal work surface by a conveying line (L). The endless belt (10) is situated above the conveying line (L) and forms a first top winding end (12), distal with reference to said conveying line (L), and a second bottom winding end (11), proximal and nearing to said conveying line, and has a rounded cusp-like profile (C), at the bottom winding end, which directly faces and is near to the surface of the items (P) undergoing the decoration process and being conveyed along the conveying line (L). The curve of said profile (C) being such as to cause a considerable expansion (D) of the pits (A) passing at the bottom winding end (11), thus allowing the complete release of powders (S) contained therein over the tiles (P), thus reproducing the decoration.

## Description

The present invention relates to machines for applying powdery products on items, with the purpose to decorate the same items.

In further detail, the present invention relates to an apparatus for applying powdery and/or dry granulated products on items, for instance ceramic supports such as tiles.

Two different methods are known for decorating ceramic items, such as tiles, according to the type of raw materials (enamels) used: the realisation of "wet" decorations, when a certain quantity of water or oily substances is added to the enamels (the so-called "carrier") so as to form a, aqueous suspension or solution, and the realisation of "dry" decorations, using granulated and/or powdery enamels.

In both cases, after the coating or ornamental image has been applied on the tile, a baking step is carried out to obtain vitrification thereof.

The equipment proposed by the present invention has specific application in the field of "dry" decorations.

A decorating equipment for "dry" enamel application is known, which is provided with a belt adapted for receiving the enamel powders and for transferring afterwards the latter onto the surface of the tiles to be decorated.

Such belt is provided with a series of pits whose arrangement on the surface of the belt itself reproduces a figure, an image or a decoration to be realised on the tiles (in technical jargon the belt with the pits incised thereon is called "sleeve").

The sleeve is wound closed-ring-wise onto rollers, of which at least one is driving, and is located above a line conveying tiles to be decorated with its winding ends at a same height as the latter: consequently, the sleeve is configured with both its runes, respectively with a top operating run and with a bottom operating run, arranged horizontally.

Moreover, such equipment is provided with a station for feeding the enamel powders, consisting of a tank for releasing the latter, arranged above the top sleeve run adapted for releasing and laying the powders on the portion of surface of the top sleeve run passing below it.

Along the top sleeve run, according to the feeding direction, downstream of the powder release tank and upstream of the sleeve end return section, there are arranged means for removing the powders laid on the so-called white portions of the belt (surface portions of the sleeve not provided with the pits).

Such powder removal means are provided with a doctor arranged transversally to the sleeve and in grazing contact with the surface of the latter.

The equipment carries out the application of the enamel powders on the tiles as follows: the powders laid into the pits on the top sleeve run, during the winding of the latter around the relevant return roller and its overturn to form the bottom run of the closed ring, are released by the same pits and fall, thereby laying on the outside surface of a tile passing below on the conveying line, therefore reproducing the decoration.

The release of the powders contained in the pits is mainly determined by gravity.

A disadvantage that is currently found in this type of equipment consists of the need of actuating the sleeve at very low operating speed to prevent, upon releasing the powders following the sleeve overturn; a casual projection and shedding of a portion of the latter in directions other than the tile to be decorated, due to the centrifugal force.

Then, if on the one side the operation of the equipment at high operating speeds allows obtaining a good production capacity, on the other side it does not allow obtaining a good quality of definition of the decoration's hues.

On the other hand, if the operation of the equipment at low operating speeds allows obtaining a good quality of definition of the decoration's hues, it does not allow optimum production levels.

A further disadvantage of such equipment consists in that the sleeve, in particular the relevant bottom run, is constantly facing towards and close to the tiles to be decorated, and therefore subject to be impinged by the humidity released by the latter.

As a consequence, as time goes by, the sleeve becomes damp and the powders tend to stick to the pits rather than fall on the tiles.

Moreover the powders, due to their abrasive properties, cause an inevitable wear of the doctor, which must be replaced frequently (e.g. every 5-6 minutes), with consequent decline of the abrasion action (the white portions of the sleeve will not be completely cleaned, the decorations obtained will therefore exhibit low definition and quality, and moreover the powders will also be laid on tile portions that must not be decorated).

The object of the present invention is to propose an equipment for applying powdery products on items for decorating the same items, e.g. for decorating ceramic or non-ceramic supports, which equipment is capable of overcoming the above mentioned prior art drawbacks.

In particular, the object of the invention is to propose an equipment for applying powdery enamels for the decoration of the ceramic supports, for instance ceramic supports such as tiles, which equipment is capable of keeping an operation rate higher than the one of the prior art apparatuses, while ensuring at the same time the best definition of the image reproduced on the same tiles.

Another object of the invention is to propose an equipment for applying powdery enamels for decoration of tiles, which has a sleeve prevented from being impinged by the humidity released by the latter, but at the same time kept at a constant humidity level.

Yet another object of the present invention is to propose an equipment, which is capable of clearing the sleeve of residuals of enamels powder, further to any application operation of the powder on the tiles.

Yet a further aim of the invention is to propose an equipment in which powdery enamels of any granule size can be use to make the decoration.

The above mentioned objects are achieved by the features of the independent claim, while preferred features are defined in the dependent claims.

The invention will now be described in more detail with reference to particular, non-limiting embodiments and with reference to the accompanying drawings, in which:
- Figure 1 shows schematically and according to a side view, the equipment for applying powdery products on items for decoration thereof, which equipment is the subject of the present invention in its entirety;
- Figure 1A shows, in a very enlarged scale, a detail of the proposed equipment;
- Figure 2 shows a side view of a process step in which the powdery product is applied on a item, while figures 2A, 2B, 2C and 2D show, with a very enlarged scale, particularly significant elements of the equipment being the subject of the present invention, in subsequent operation steps;
- Figures 3A, 3B and 3C show, in a very enlarged scale, another interesting embodiment of significant elements of the equipment as they appear in different corresponding operation configurations.

With reference to the attached drawing tables, reference numeral (100) indicates the equipment for applying dry powdery products on corresponding items for decorating the same, object of the present invention, as a whole.

The items (P) on which a decoration is to be realised by the application of enamels in granular and/or powdery form (S) are conveyed along a horizontal work surface by a conveying line (L).

Such items (P) can consist, for example but not preferably, of ceramic supports, such as tiles, plates, etc., or of non-ceramic supports.

In the following description, by way of a non-limiting example, reference shall be made to the decoration of tiles (P).

The equipment (100) is provided with an endless belt (10) made of a permanent antistatic synthetic elastomeric material, with a hardness value preferably comprised between 60 and 90 Shore, which at portions of its outside surface is provided with a series of pits (A), preferably realised by the laser etching technique. The pits are aimed at receiving inside them the powders or granules of enamel (S) to be laid on the tiles (P), and their arrangement on the surface of the belt (10) depicts the decoration to be reproduced on the same tiles (P).

Such endless belt (10) is positioned above the conveying line (L) so as to exhibit a first top winding end (12) in distal configuration relative to said line (L) and a second bottom winding end (11) in proximal configuration relative to the latter.

The belt is characterised in that at the relative bottom winding end (11) it exhibits a profile (C) shaped as a rounded spire, or a cusp, that is directly facing towards and in the proximity of the surface of the tiles (P) conveyed by line (L): such bottom end (11) represents the so-called depicting station (W), that is, station for applying the enamel powders (S) to the tiles (P).

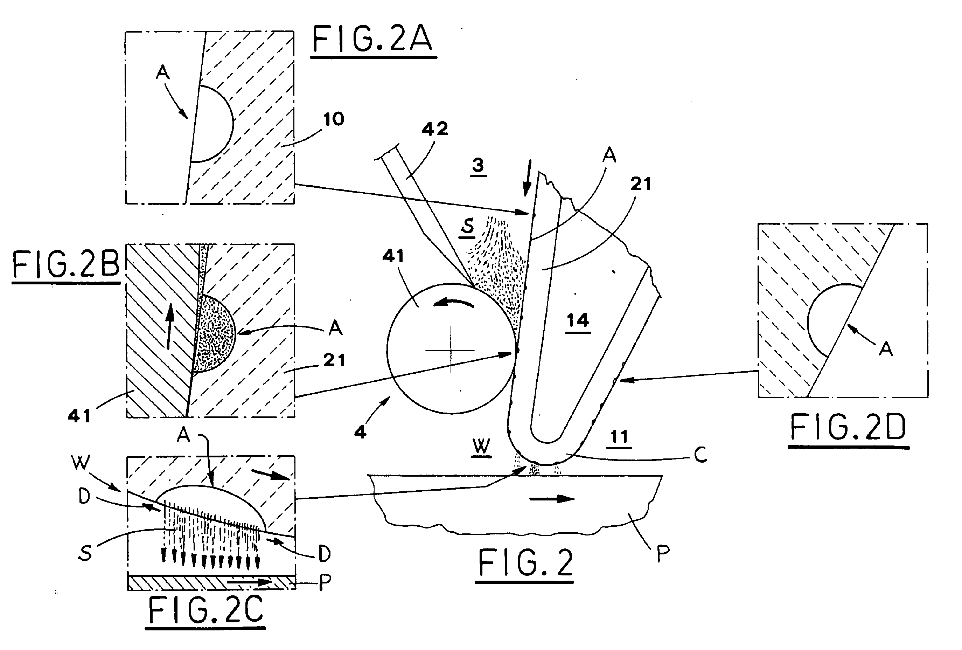

The bending of profile (C) is such as to cause a considerable expansion, by elastic deformation (indicated by arrows (D) in figure 2C) of the pits (A) passing at the bottom winding end (11) of the belt (10) to allow the complete release of powders (S) contained therein and their fall on top of the tiles (P) thus reproducing the decoration.

To allow an optimum release of all granules of the powders (S) from the pits (A), profile (C) of the bottom winding end (11) exhibits a bending diameter preferably comprised between 4 and 10 mm.

The endless belt (10) is wound, at the relative top winding end (12), around a feeding roller (13), and wound, at the mentioned bottom winding end (11), around a suitable abutment member (14) for defining profile (C) shaped as a rounded spire, and tensioning the same belt (10).

As a consequence, the endless belt (10) exhibits a first advance run (21), actuated downwards towards the conveying line (L) of the tiles (P) to be decorated and adapted for receiving the laid powders (S) to be released on the latter, and a second return run (22) upwards.

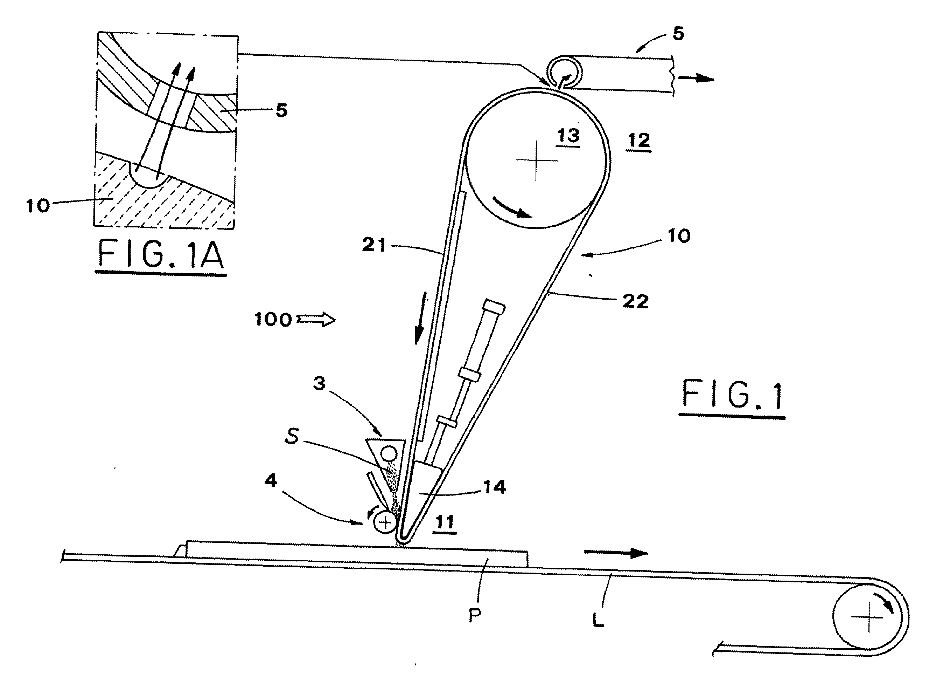

Such advance run (21) of belt (10) is arranged, for example as shown in figures 1, 2, and 3A, preferably vertical relative to the work surface of the conveying line (L); for example, so as to determine an angle close to 90°C relative to it.

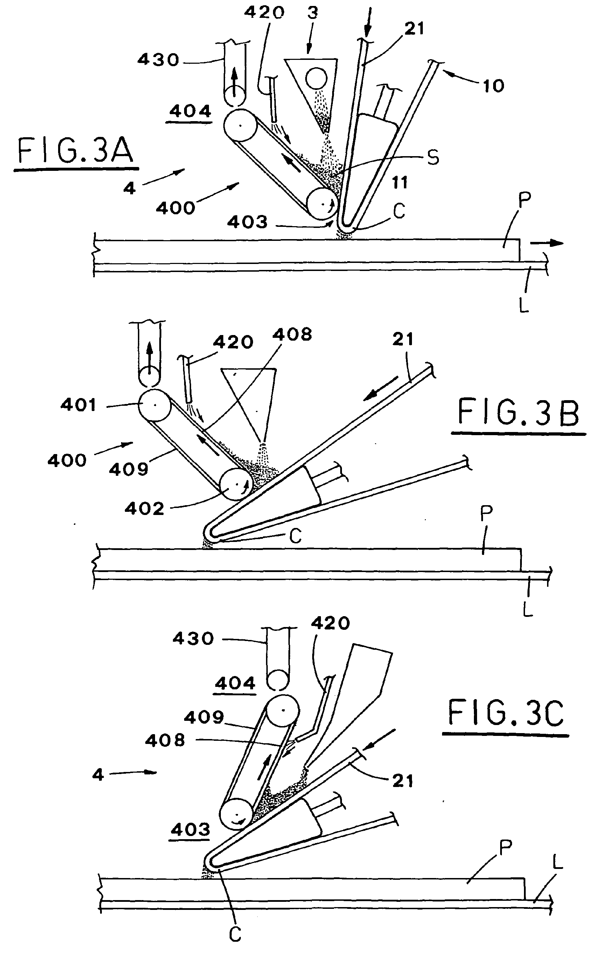

In any case, equipment (100) is provided with means (not shown in the attached figures) to adjust the orientation of belt (10), and therefore, the inclination of the advance run (21) relative to the conveying line (L), according to preferred configurations, two of which for example are shown in figures 3B and 3C, in any case such as to always arrange the mentioned profile (C) facing towards the surface of the tiles (P) conveyed by said line (L).

The aforementioned means also allows adjusting and varying the distance of said profile (C) from line (L), according to the type of items on which the enamel powders are to be applied.

The equipment (100) is further provided with means for feeding the powders (S), globally indicated with reference numeral (3) and not described in detail since of the known type, arranged in the proximity of the bottom winding end (11) of the belt (10), facing the advance run (21), adapted for conveying and scattering on the surface of the latter such powders (S) for filling the pits (A) in suitable phase advance as they pass at such bottom end (11).

The equipment (100) is further provided with operating means (4), arranged at said bottom winding end (11) downstream of the aforementioned feeding means (3) (reference shall be made to figure 2) and acting on the advance run (21), that carry out the dual function of ledge and striker for powders (S) conveyed by the feeding means (3) towards the advance run (21), to make easier their accumulation on the surface of the latter and to better fill the pits (A), and remove the excess powders (S), laid outside the pits (A), in suitable phase advance as they pass at said bottom end (11).

Such means (4), according to a first embodiment shown in figures 1 and 2, consists of a horizontal axis roller (41) made of a permanent antistatic material and arranged relative to the belt (10) so that the relative side surface is tangent to the advance run (21) and actuated in counter-rotation relative to the latter.

Such roller (41), thanks to its counter-rotating motion relative to the feeding direction of the advance run (21) of the belt (10), removes the powders laid outside the pits (A), throwing them back upwards without performing any scraping action on the surface of the belt (10), thereby cleaning the so-called "white" portions of the belt and at the same time, it compacts the powders laid into the pits (A).

Associated to the roller (41) there are provided suitable means (42) for cleaning the side surface of the latter and means (not shown as they are of known type) for recovering the powders removed from the "white" portions of the belt.

Such cleaning means (42) consist of a blade arranged grazing the side surface of the roller (41), above the tangent points with the belt (10), adapted for removing from the side surface of the roller (41) the powders laid thereon to clean it, and also adapted for striking the powders projected upwards by the roller (41) to prevent them from being projected towards undesired zones and allow their recovery.

Such means (4), according to a possible further embodiment shown in figures 3A, 3B, and 3C, provide for a mat (400), made of a permanent antistatic material and with a width at least equal to the width of the endless belt (10), which is wound closed ring-wise on the relevant rollers (401, 402), of which at least one is driving.

Such mat (400) is arranged relative to belt (10) so as to be tangent to the advance run (21) of the latter at a relative first winding end (403), and as to exhibit the relative second winding end (404) arranged above the first winding end (403).

Mat (400) is actuated so as to wind around said first winding end (403) in counter-rotation relative to the feeding direction of the advance run (21) and so as to determine a first operating run (408), with upwards removal motion from said belt (10), and a second operating run (409) with downward approaching motion to the latter.

Passing in counter-rotation in the tangent points with the advance run (21), such mat (400) removes the powders laid outside pits (A) throwing them back upwards, thereby cleaning the so-called "white" portions of the belt and at the same time, it compacts the powders laid into the pits (A).

Associated to the mat (400) there are provided suitable means (420) for cleaning the surface of the upward run (408) of the latter and for recovering the powders removed from the "white" portions of the belt.

Such means (420) are provided with an air flow outlet facing the upwards run (408) of the mat adapted for addressing the air flows to lick the surface of the latter so as to remove the heap of powder from it by throwing it back towards the belt (10) to be recovered.

It should be noted that the special configuration of the mat (400), with the relevant upwards run (408) inclined relative to the vertical, favours the gravity fall of powders towards the belt (10), favouring the recovery.

In the proximity of the second winding end (404) of mat (400) there are arranged intake means (430), operated either manually by an operator or by a special sensor for detecting the presence of powders on the mat, for sucking and cleaning the upwards run (408) of any powder residues.

As shown in detail in figures 3B and 3C, the spatial configuration of mat (400) can be changed and adjusted according to the configuration taken by the profile (C) of the bottom end (11) of the belt (10), always remaining tangent to the advance run (21) and counter-rotating relative to the feeding direction of the latter at the first winding end (403), with the relative upwards run (408) moving away from such tangent points.

The equipment (100) is further provided with intake means (5) arranged at the top winding end (12) of the belt (10) adapted for sucking any residual traces of powders from the belt and from the pits, and also adapted for cutting the rate of humidity accumulated on the same belt during the repeated operating cycles.

The aforementioned abutment member (14), defining the configuration of profile (C) of the bottom winding end (11), can be provided vibrating, to further improve the release of powders from the expanded pits (A), as well as advantageously retractable to allow the replacement of the endless belt (10) wit other belts provided with pits having different cross sections and different depths.

This makes the proposed equipment especially versatile since it is possible to fit belts provided with suitable pits on it for realising decorations by powders of any particle size.

The pit section, in fact, must be selected based on the particle size of the powders used for decorating, whereas the pit depth affects the hue of the decoration obtained on the tiles.

The operation of equipment (100) subject of the invention is briefly described hereinafter, with special reference to the sequence of operating steps illustrated in the succession of figures 2, 2B, 2C and 2D.

When the belt (10), in the advance run (21), passes at the feeding means (3), it is subject to the laying of powders (S) that fill the pits (A) and lay into the "white" portions.

The roller (41) removes the excess powders from the "white" portions of the belt (10) throwing them back upwards, and compacts the powders present in the pits (A); the blade (42) cleans the side surface of the roller (41) while the recovery means (not shown) recover such powders.

When the pits (A) pass at the bottom winding end (11) of the belt (10) (depicting station (W)), the bending of the profile (C) of the latter determines a considerable expansion of the section of the pits (A) (illustrated with the arrows (D) in the figure) that facilitates the complete release of the powders contained therein and their fall on the surface of the tile (P) conveyed by the conveying line (L).

Once they have passed the bottom winding end (11), the pits (A) return to their natural configuration in the return upward run (22) (figure 2D).

The belt (10) is actuated by the feeding roller (13) in suitable phase relation with the feeding of the tiles (P) carried out by the conveying line (L) so that the pits (A) filled with powders (S) pass at the bottom winding end (11), that is, at the depicting station (W), as a corresponding tile (P) is passing.

The equipment (100) subject of the present invention therefore advantageously allows releasing the decorating powders only in the direction of the tiles to be decorated, also at high belt operation speeds.

This is made possible by the innovative orientation of the belt (10) with arrangement of the bottom winding end (11) or depicting station (W) releasing the powders, directly facing the conveying line (L) feeding the tiles (P) as well as by the special configuration of the relevant profile (C), shaped as a rounded spire.

The closeness of the depicting station (W) (1 mm approximate distance) to the outside surface of the tiles (P) conveyed by the line (L) prevents a projection of the powders, by centrifugal force, into directions other than the same tiles, whereas the bending of profile (C) of the same depicting station (W) determines such expansion of the pits as to allow a complete release of the powders contained therein.

Moreover, the possibility of making the abutment member (14) vibrating further facilitates the release of powders only in the direction of the surface of the underlying tile.

As a consequence, the belt (10) can be actuated at such speeds as to allow an advance of the line (L) by 25-30 metres/minute; the equipment proposed therefore allow reaching considerable higher production levels compared to those of prior art equipment and at the same time obtaining an optimum definition of the decoration hues.

Moreover, the arrangement of the means (3) for feeding the powders on the belt (10), directly in the proximity of the same bottom winding end (11) that releases the same powders prevents a loss of the same powders by gravity fall before they are released on the tiles.

Moreover, it should be noted that the means (4) for removing powders (roller (41), according to the first embodiment described, or mat (400) according to the second embodiment (proposed in figures from 3A to 3C) carry out the powder removal without scraping the belt surface and consequently, they are subject to a negligible wear action.

It should also be noted that the equipment faces the tiles only at the bottom winding end (11) of the belt (10), therefore the risk of accumulation of humidity released by the tiles on the same belt is drastically reduced, virtually eliminated.

Moreover, the advantageous presence of the intake means (5) allows, at any decoration cycle, the removal of any traces of residual powders from the pits and from the white portions, as well as keeping the same belt constantly dehumidified.

## Claims

1. Equipment for applying powdery products on items for decorating the same items, the equipment including an endless belt (10) featuring, in its outer surface, a plurality of pits (A) for receiving said powdery products (S) therein, said pits being so arranged in said surface, as to reproduce the decoration to be made on said items (P), with said items being conveyed along a horizontal work surface by a conveying line (L), said equipment (100) being **characterised in that** said endless belt (10) is situated above said conveying line (L), in such a way as to define a first top winding end (12), set in distal configuration with reference to said conveying line (L), and a second bottom winding end (11), set in proximal nearing configuration with reference to said conveying line, and **in that** said endless belt (10) has a rounded cusp-like profile (C), at the bottom winding end, which directly faces and is near to the surface of the items (P) undergoing the decoration process and being conveyed along the conveying line (L), the curve of said profile (C) being such as to cause a considerable expansion (D) of the pits (A) passing at the bottom winding end (11), to allow the complete release of powders (S) contained therein over the tiles (P), thus reproducing the decoration.

2. Equipment according to claim 1, **characterised in that** said endless belt (10) is wound, at the relative top winding end (12), around a feeding roller (13), and is wound, at the mentioned bottom winding end (11), around a suitable abutment member (14) for defining said profile (C) shaped as a rounded cusp, and for tensioning the same belt (10), thus defining a first advance run (21), actuated downwards by said feeding roller (13), in suitable phase relation with the feeding of the tiles (P) carried out by the conveying line (L), and adapted to be filled with powders (S) to be released on said items, and defining a second upwards return run (22).

3. Equipment according to claim 2, **characterised in that** the said advance run (21) is arranged, preferably, vertical relative to the work surface of the conveying line (L).

4. Equipment according to claim 3, **characterised in that** the said advance run (21) determines an angle close to 90°C relative to the work surface of the conveying line (L).

5. Equipment according to claim 2, **characterised in that** the inclination of said advance run (21) relative to the work surface of the conveying line (L) can be adjusted and varied according to different operation configurations, all of them featuring the above mentioned rounded-cusp profile (C) facing towards the surface of the tiles (P) to be decorated.

6. Equipment according to claim 2, including means (3) for feeding the powders arranged in the proximity of the bottom winding end (11) and facing the advance run (21), adapted for conveying and scattering on the surface of the latter such powders (S) for filling the pits (A) in suitable phase advance as they pass at such bottom end (11), **characterised in that** operating means (4) are provided for removal of in-excess powders, and are arranged at said bottom winding end (11) downstream of the aforementioned feeding means (3) and aimed at removing the powders (S) laid outside the pits (A) and at compacting at the same time the powder collected inside the pits, in suitable phase advance as they pass at said bottom end (11).

7. Equipment according to claim 6, **characterised in that** said means (4) for removal of in-excess powder consists of a horizontal axis roller (41) so arranged that the relative side surface is tangent to said advance run (21), and actuated in counter-rotation relative to the latter.

8. Equipment according to claim 7, **characterised in that** said roller (41) is made of a permanent antistatic material.

9. Equipment according to claim 7, **characterised in that** it includes, associated to the roller (41), means (42) for cleaning the side surface of the latter and means for recovering the powders removed.

10. Equipment according to claim 9, **characterised in that** said cleaning means (42) consist of a blade arranged grazing the side surface of the roller (41), above the tangent points with the belt (10).

11. Equipment according to claim 6, **characterised in that** said means (4) for removal of in-excess powder include a mat (400), which is wound closed ring-wise on relevant rollers (401, 402), of which at least one is driving, said mat (400) being arranged so as to be tangent to the advance run (21) at a relative first winding end (403), and so as to have the relative second winding end (404) arranged above the first winding end (403), said mat (400) being actuated so as to wind around said first winding end (403) in counter-rotation relative to the advance run (21) and so as to determine a first operating run (408), with upwards removal motion away from said run (21), and a second operating run (409) with downward approaching motion to the latter, so that said mat, passing in counter-rotation in the tangent points with the advance run (21), removes the powders laid outside the pits (A) and at 'the same time, it compacts the powders laid into the pits (A), in suitable phase advance with their passing at the bottom end (11).

12. Equipment according to claim 11, **characterised in that** it includes, associated to the mat (400) suitable means (420) for cleaning the surface of the upward run (408) of the latter and for recovering the powders removed from the "portions of the advance run (21) outside the pits (A).

13. Equipment according to claim 12, **characterised in that** said cleaning and recovering means (420) are provided with at least one air flow outlet situated near said upwards run (408) for addressing air flows to lick the surface of the latter so as to remove the heap of powder from it by throwing it back towards the advance run (21).

14. Equipment according to claim 11 and claim 12, **characterised in that** in the proximity of said second winding end (404) of mat (400) there are arranged intake means (430), operated for sucking the upwards run (408) of possible powder residues.

15. Equipment according to claim 14, **characterised in that** said intake means (430) are operated manually.

16. Equipment according to claim 14, **characterised in that** said intake means (430) are operated by sensors which detect the presence of powder on said upwards run (408).

17. Equipment according to claim 11, **characterised in that** said mat (400), is at least as wide as the said advance run (21) is long.

18. Equipment according to claim 11, **characterised in that** said mat (400) is made of a permanent antistatic material.

19. Equipment according to claim 5 and to claim 11, **characterised in that** the spatial configuration of said mat (400) can be adjusted in accordance with the configuration taken by said advance run (21) with reference to the work surface of said conveying line (L).

20. Equipment according to claim 2, **characterised in that** it includes intake means (5) arranged facing the top winding end (12) and adapted for sucking any residual traces of powders from the belt (10) and from the pits (A), and also adapted for cutting the rate of humidity accumulated on the same belt (10).

21. Equipment according to claim 1, **characterised in that** said profile (C) of said bottom winding end (11) has a bending diameter in the range from 4 to 10 mm.

22. Equipment according to claim 1, **characterised in that** said endless belt (10) is made of a permanent antistatic synthetic elastomeric material, with a hardness value comprised between 60 and 90 Shore.

23. Equipment according to claim 22, **characterised in that** said endless belt (10) is made of an antistatic synthetic elastomeric material.

24. Equipment according to claim 23, **characterised in that** said endless belt (10) is made of a permanent antistatic synthetic elastomeric material.

25. Equipment according to claim 2, **characterised in that** said abutment member (14) is operated with a vibrating motion.

26. Equipment according to claim 25, **characterised in that** said abutment member (14) is retractable to allow the replacement of the endless belt (10).
